# EUROPEAN PATENT SPECIFICATION

(11) **EP 2 875 245 B1**
(45) Date of publication and mention of the grant of the patent: **23.11.2016**
(21) Application number: 13745272.8
(22) Date of filing: 22.07.2013
(51) Int. Cl.: F16B 43/00

(54) **LOAD-RELIEF WASHER ASSEMBLY FOR THREADED FASTENERS**
ENTLASTUNGSSCHEIBENBAUGRUPPE FÜR GEWINDEVERBINDUNGSTEILE
ENSEMBLE DE RONDELLES DE LIMITATION DE CHARGE DESTINÉ À DES PIÈCES DE FIXATION FILETÉES

(30) Priority: 23.07.2012 US 201213555214
(43) Date of publication of application: 27.05.2015
(73) Proprietor: Integra Services Technologies Inc., Woodstock, GA 30189-6891 (US)
(72) Inventor: PSIMAS, Michael, James, Milton, GA 30004 (US)
(74) Representative: Johnstone, Douglas Ian
(86) International application number: PCT/US2013/051470
(87) International publication number: WO 2014/018443

(56) References cited:
- EP-A1- 0 559 989
- US-A1- 2011 318 140
- US-B1- 6 966 735

## Description

### FIELD

The present disclosure relates to a load-relief washer for threaded fasteners. More specifically, the present disclosure relates to the use of a multiple part washer with complementary stepped or castellated features to selectively eliminate the tensile load in a bolt or stud.

### BACKGROUND

Galling is a common complication that arises when fastening or disassembling threaded components. Galling can result in damage to the threaded features or seizing of said components. Such damage or seizing can often be costly to repair or remedy. Galling is a form of adhesive wear and material transfer between metallic surfaces during operations in which relative motion of said surfaces is involved. The fastening of threaded components, in which interlocking threaded features are slid past each other under high loads, is an industrial operation which is notably prone or vulnerable to galling. Galling is a major concern in said application because the same features which promote galling, such as material ductility, metal on metal contact, friction, and high compressive loads, are not only present, but are indeed necessary features for operation.

However, galling can also occur at relatively low loads since localized pressure and energy density are greater than their respective macroscopic values. It is these local values which can result in elevated friction, promote material transfer, and induce phase transition. When two metallic surfaces, such as complementary screw threads, are forced together, the high points or asperities found on each surface are the initial mating points. It is possible for said asperities to penetrate the opposing surface upon application of relative movement, thereby initiating plastic deformation and frictional forces between said surfaces. The induced pressure is highly localized, and the small region upon which the pressure is applied is termed the contact zone. Said pressure elevation yields increased friction heating and adhesive forces, thereby resulting in initiation of material transfer, creation of additional protrusions, and growth of said protrusions. Furthermore, galling is especially likely when disassembling threaded fasteners which have been in service for several years due to additional debris from local oxidation, foreign contaminants, and the breakdown, seepage, and removal of assembly lubricants.

The high ductility of commonly used machine screws can be considered a requisite characteristic for substantial material transfer and galling. Frictional heating is greatly related to the size, shape, and material properties of the plastic zones that surround the penetrating objects. Correspondingly, brittle fractures rarely generate copious amounts of heat due to the small, transitory plastic zones. If the height of the protrusion grows larger than a critical threshold value, it may penetrate the brittle oxide layer of the complementary mating surface. As a result, said protrusion could cause damage to the ductile bulk material on which the oxide layer originally formed, thus creating a region of plastic flow around said protrusion. Thus, the geometry, loading conditions, and relative motion of the protrusion govern the material flow, contact pressure, and thermal profile during sliding.

In the dynamic sliding contact of nut torqueing, increasing axial compressive force is proportionally equal to a rise in potential energy and thermal energy in the aforementioned localized system. Thus, the high loads and relative rotation associated with the torqueing of threaded nuts onto and off of threaded counterparts are particularly susceptible to galling. Additionally, as the nut is turned further and sliding progresses, additional energy is supplied to the system. Initially, there is limited energy loss in the system (contact zone), since heat conduction away from the contact zone is significantly inhibited by the relatively small cross sectional area for thermal transport, and correspondingly low conductance, on the system boundary. The result is a corresponding increase in energy density and temperature in the contact zone, and said energy accumulation can damage the contact surfaces and alter their plastic behavior. Furthermore, the combination of direct contact and plastically deforming flow fields can result in the constitution of a common plastic zone in which the high energy density, pressure, and temperature promote inter-surface bonding. Generally, this greatly increases apparent adhesion as well as the force needed for further nut advancement or removal. In some cases this can cause seizing of the nut onto the threaded component, and removal of said nut requires time-consuming or destructive techniques such as cutting of the nut or screw. Reducing or eliminating the compressive load between threads greatly reduces the likelihood of galling due to a decrease in localized potential energy and frictional heating in the system.

One possible method of galling prevention is the use of a tensioning system to stretch the bolt before turning the nut off. Examples of such tensioning systems include hydraulic bolt tensioners and hydraulic nuts. However, the use of such systems can be time intensive and often require additional hydraulic machinery to produce the requisite operating pressures. Furthermore, said tensioning methods involve temporarily increasing the compressive load on the bolted component during disassembly, which may be undesirable in some circumstances. Examples of hydraulic tensioning devices can be found in United States patent numbers 4,998,453; 5,527,015; and 7,673,849.

Another possible method of galling prevention is the use of a plurality of jackbolts to mechanically tension and unload the main stud or bolt. Contrary to the previously described hydraulic tensioning systems, this method has the advantage of not necessitating an increase of the compressive load on the bolted components during disassembly. However, this method of disassembly can be time intensive since multiple jackbolts must be unloaded for each main stud, often employing an iterative, step-wise unloading scheme. Examples of multiple jackbolt devices can be found in United States patent numbers 3,618,994; 4,338,037; and 4,622,730.

An additional method of galling prevention is through the use of non-standard bolts or nuts. For example, United States patent number 8,206,072 describes a quick release nut which may be selectively disengaged from the fasteners threads. However, it is often necessary to employ standardized fasteners in order to comply with industry guidelines. Thus, the use of a specialty quick-release nut may be undesirable. US 2011/0318140 discloses a height adjustment ring spacer, US 6,966,375 discloses a screw locking assembly, and EP 0,559,989 discloses a ring and a nut for fixing a knob with a threaded portion onto a variable thickness support plate.

There is therefore a need for a load-relief washer which obviates the aforementioned problems.

Accordingly, this disclosure prevents galling threaded features during the disassembly of bolted assemblies by reducing the load on said threaded features prior to disassembly.

This disclosure also reduces the load on the aforementioned threaded features without a corresponding increase of the axial tensile bolt load.

The disclosure increases the speed of disassembly of bolted assemblies by eliminating the need for hydraulic machinery and the slow process of tensioning.

The disclosure allows the use of industry standard threaded fasteners such as threaded rods, bolts, studs, or nuts.

The disclosure increases the speed of the unloading process of bolted assemblies by requiring only a partial rotation of one part of the washer to remove the bolt load.

Other features and advantages of the present invention will become apparent to the reader upon an understanding of the illustrative embodiments about to be described or will be indicated in the claims, and various advantages not referred to herein will occur to one skilled in the art upon employment of the disclosure in practice.

### BRIEF SUMMARY

To attain these and other advantages which will become more apparent as the description proceeds, according to various embodiments of the invention there is provided a load relief washer assembly according to any one of the appended claims 1 to 12. There is further provided a method of relieving a load in a fastener assembly according to the appended claim 13.

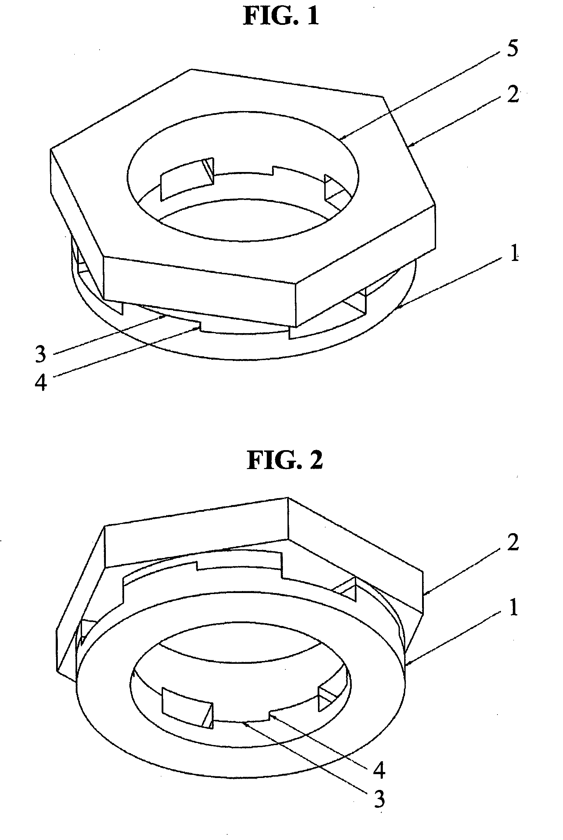

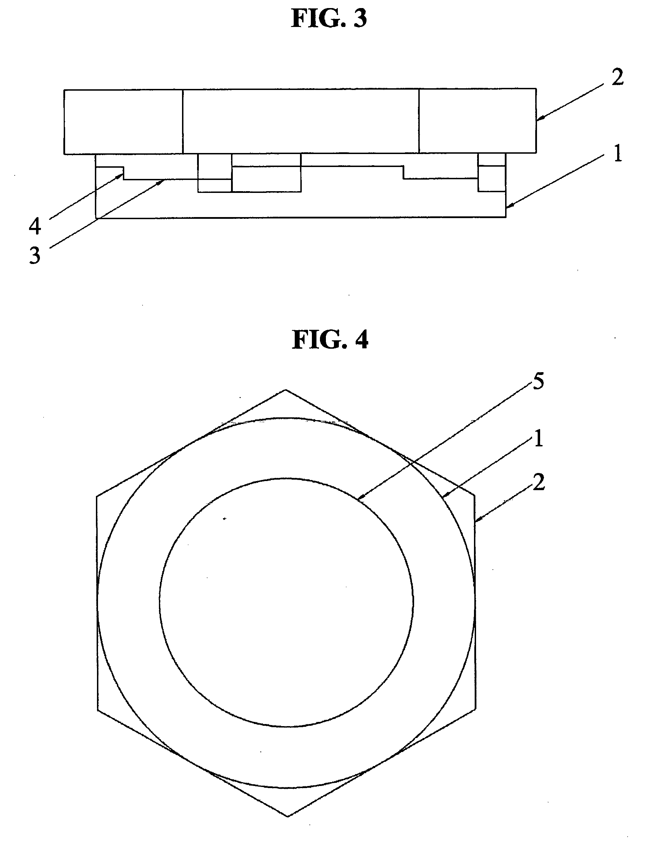

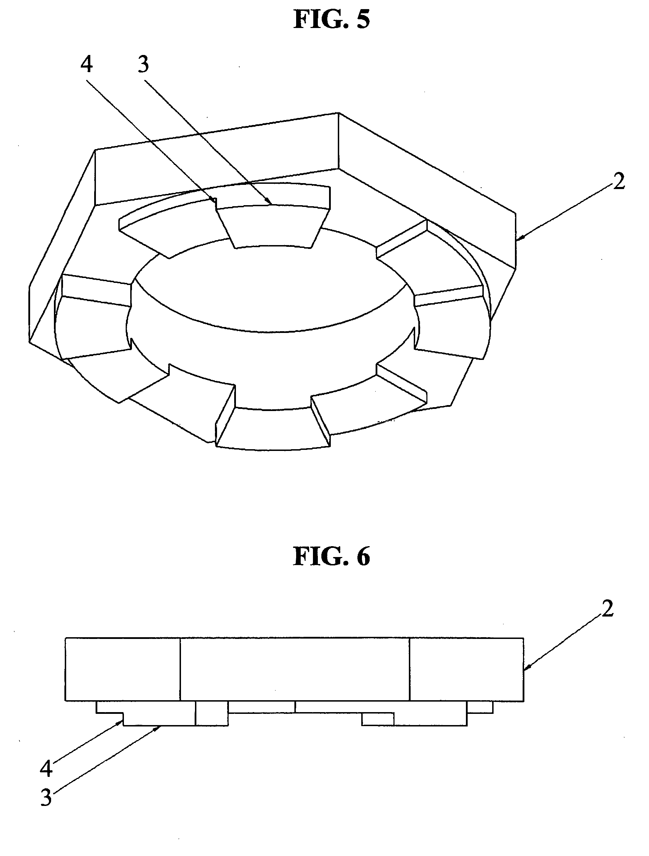

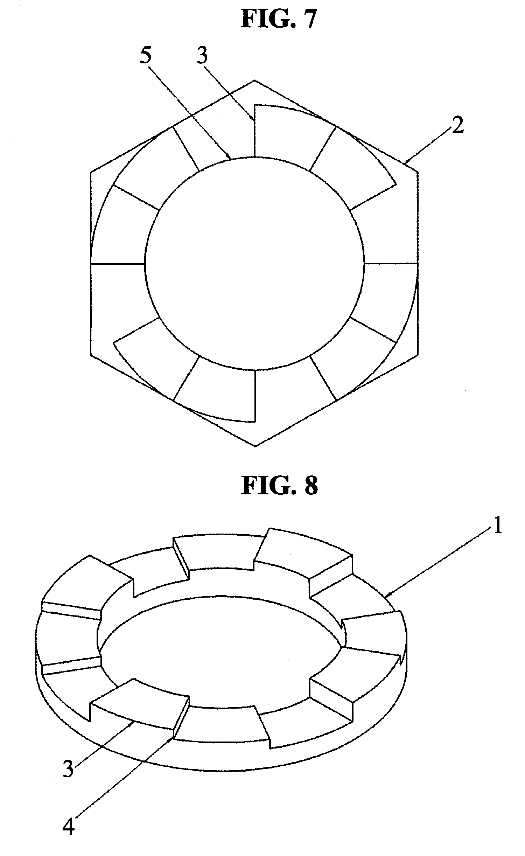

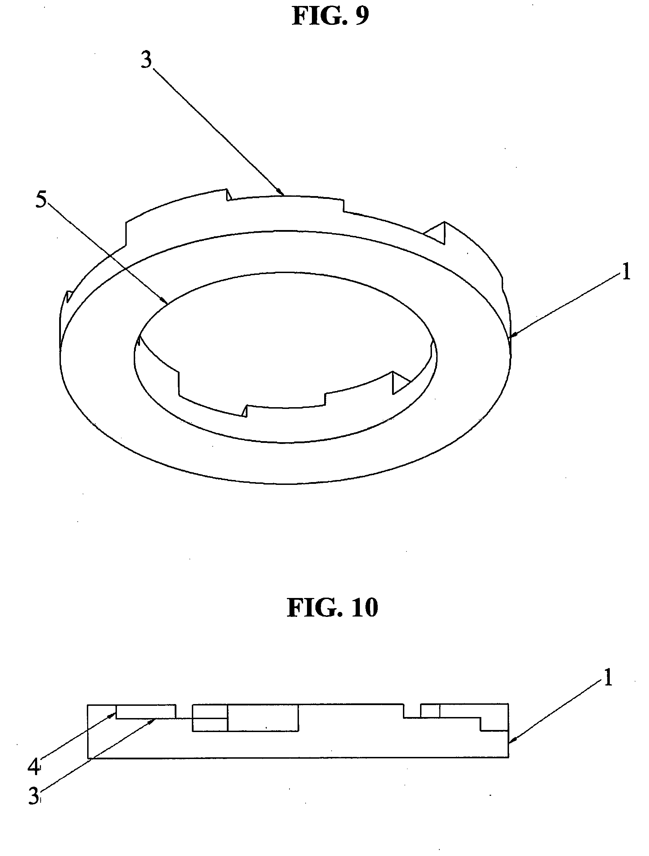

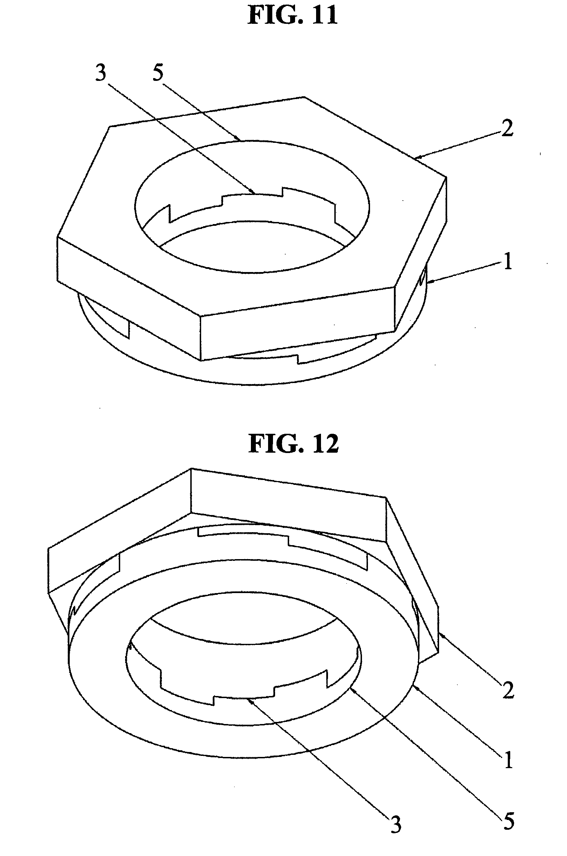

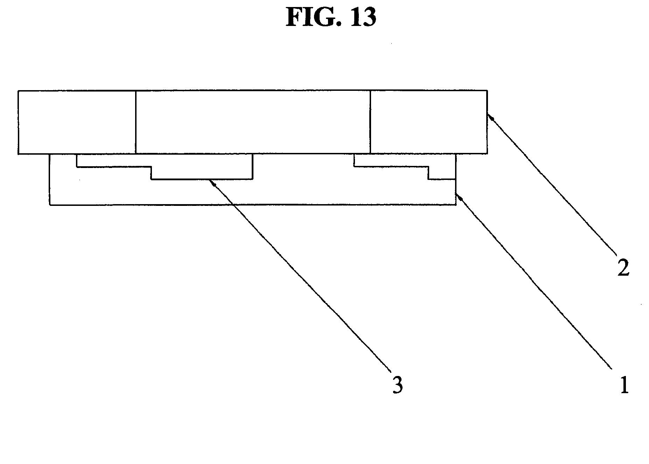

More specifically, there is provided a load relief washer assembly for threaded fasteners (FIGS. 1 to 13) comprising a lower washer piece (1), an upper washer piece (2), a plurality of complementary stepped features (4) which comprise the mating surfaces of the lower washer (1) and the upper washer (2), and a plurality of sliding planes (3) created by the interface of the lower washer (1) and the upper washer (2). The lower washer (1) and the upper washer (2) each include a hole (5) in their body through which a main bolt or stud may pass.

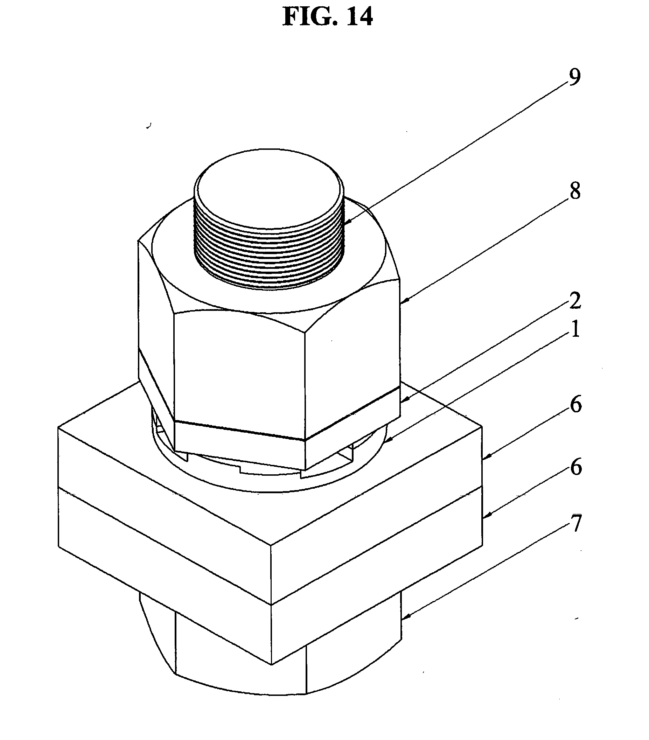

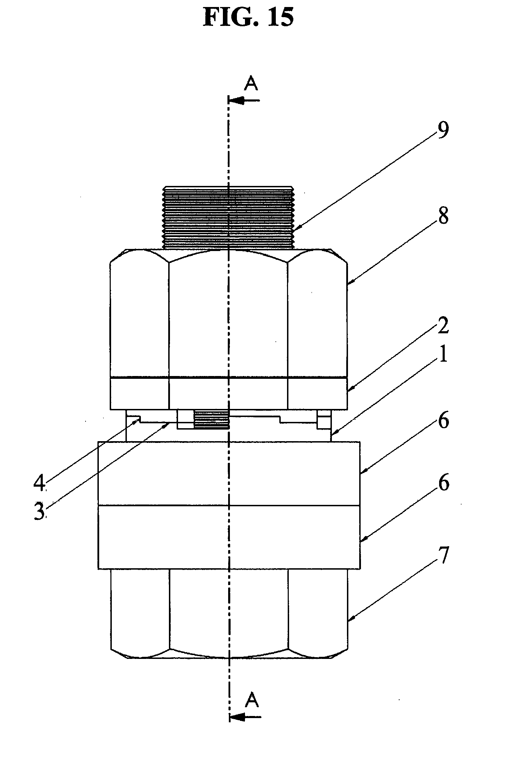

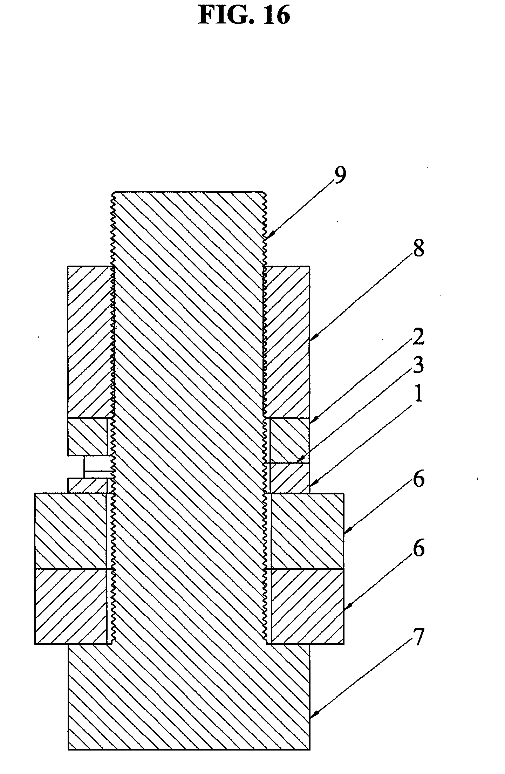

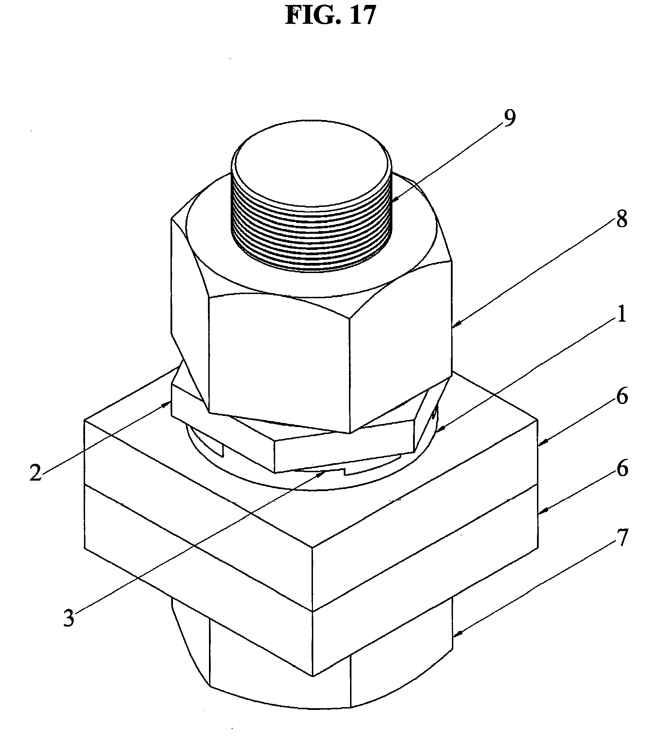

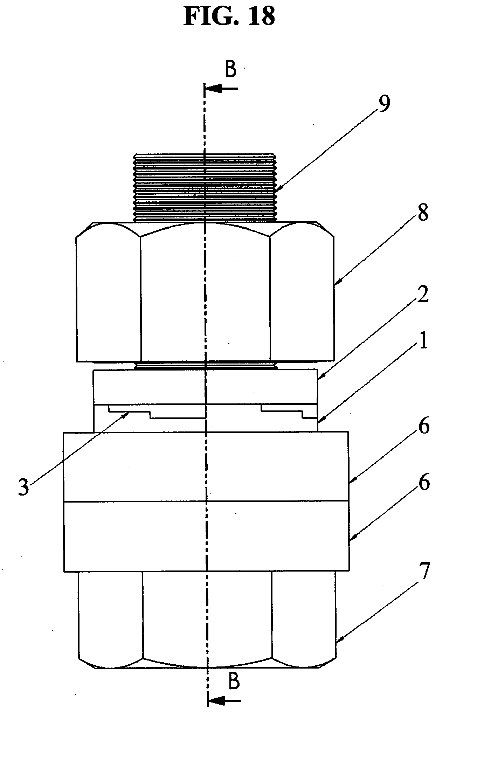

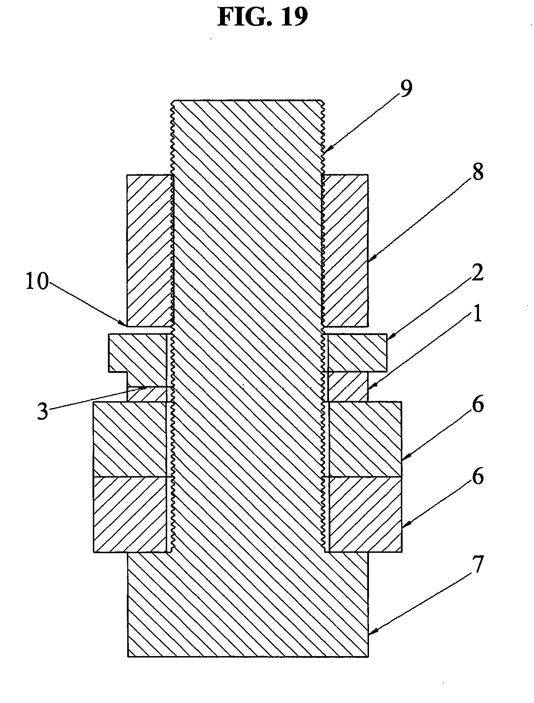

There is also provided a load relief washer assembly (FIGS. 14 to 19) combined with a threaded bolt (9) with an integrated bolt head (7) and a threaded nut (8) to clamp two work pieces (6) together. The load relief washer assembly comprises a lower washer piece (1), an upper washer piece (2), a plurality of complementary stepped features (4) which comprise the mating surfaces of the lower washer (1) and the upper washer (2), and a plurality of sliding planes (3) created by the interface of the lower washer (1) and the upper washer (2). The lower washer (1) and the upper washer (2) each include a hole (5) in their body through which the main bolt (9) passes. The tensile load in the main bolt (9) acts through the top work piece (6) and the nut (8) to compress the lower washer (1) and the upper washer (2) of the load relief washer assembly together.

To activate the load relief washer, the upper washer (2) is rotated relative to the lower washer (1), sliding along the mating surfaces (3). Once enough relative rotation between the lower washer (1) and the upper washer (2) is achieved, the complementary stepped features (4) align, allowing the lower washer (1) and the upper washer (2) to move toward each other. Said movement creates a gap (10) between the upper washer (2) and the nut (8), thereby reducing the tensile load in the main bolt (9). The reduction of the tensile load in the bolt (9) corresponds to a reduction in the forces on the threaded features of the nut (8) and the main bolt (9); thus, the bolted assembly may be disassembled with minimal risk of galling.

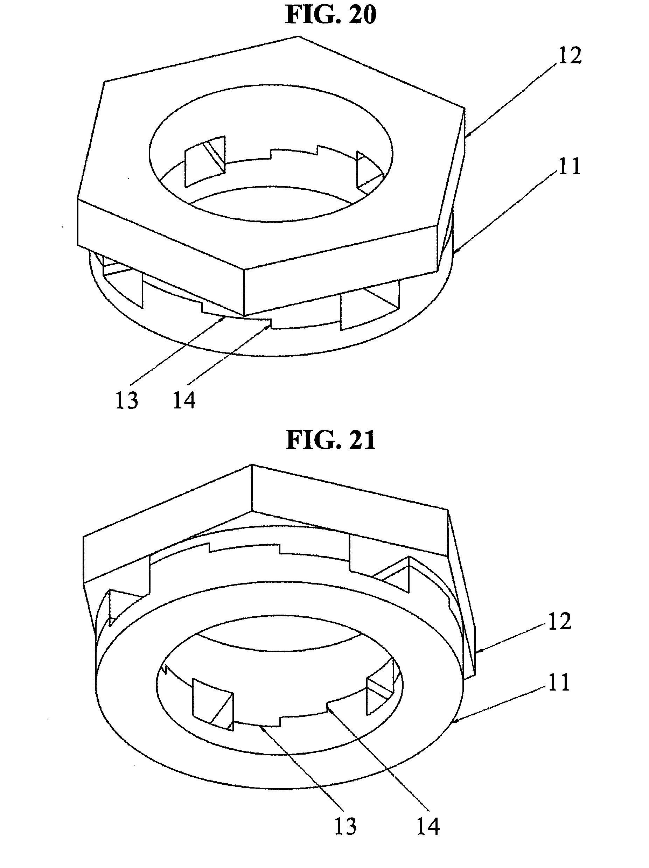

There is also provided another embodiment of the load relief washer assembly (FIGS. 20 to 21) comprising a lower washer piece (11), an upper washer piece (12), sets of four complementary stepped features (14) which comprise the mating surfaces of the lower washer (11) and the upper washer (12), and a plurality of sliding planes (13) created by the interface of the lower washer (11) and the upper washer (12).

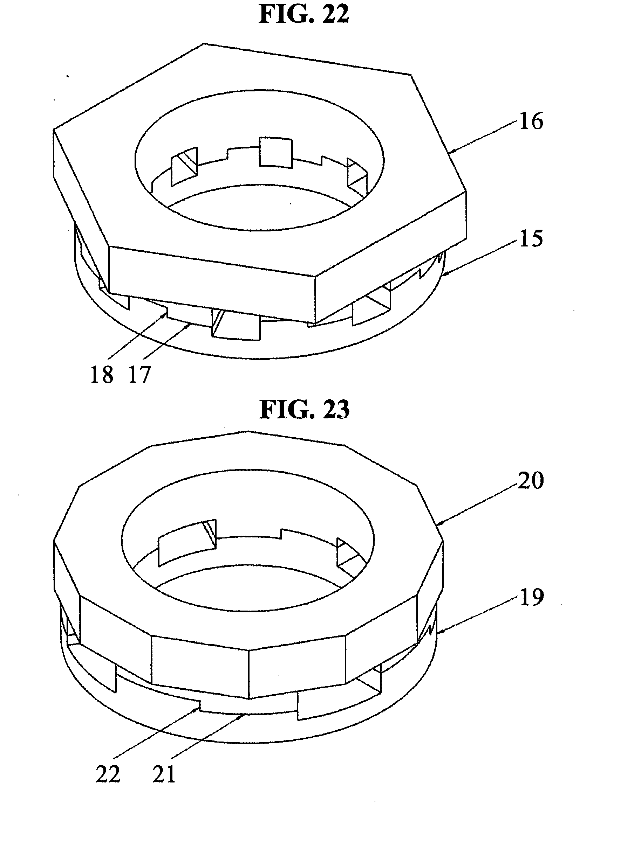

There is provided another embodiment of the load relief washer assembly (FIG. 22) comprising a lower washer piece (15), an upper washer piece (16), 8 sets of complementary stepped features (18) which comprise the mating surfaces of the lower washer (15) and the upper washer (16), and a plurality of sliding planes (17) created by the interface of the lower washer (15) and the upper washer (16).

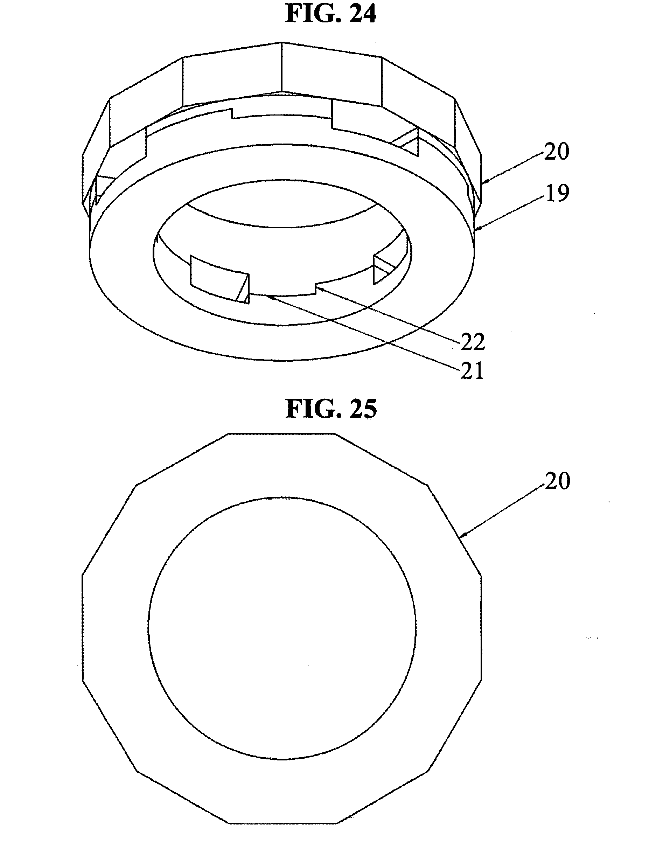

There is provided another embodiment of the load relief washer assembly (FIGS. 23 to 25) comprising a lower washer piece (19), an upper washer piece (20) with a dodecagonal feature, a plurality of complementary stepped features (22) which comprise the mating surfaces of the lower washer (19) and the upper washer (20), and a plurality of sliding planes (21) created by the interface of the lower washer (11) and the upper washer (12).

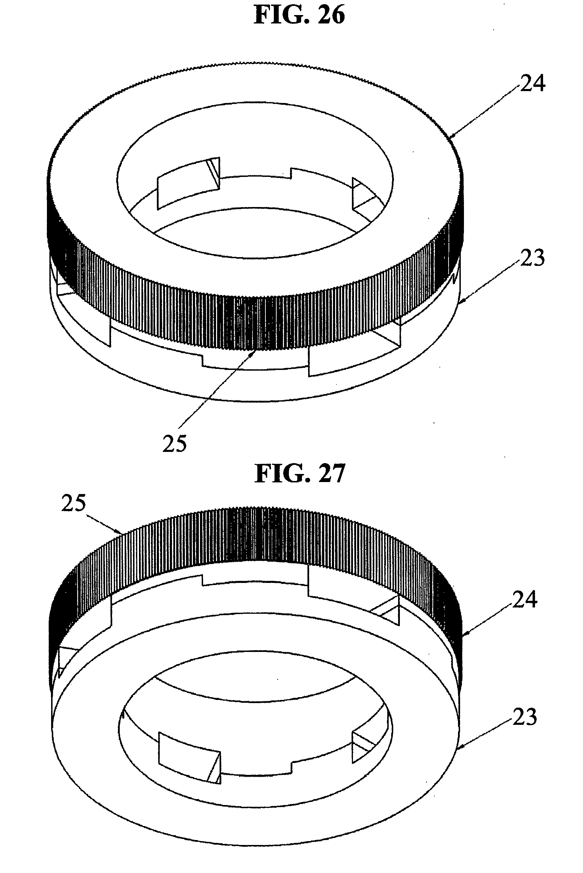

There is provided another embodiment of the load relief washer assembly (FIGS. 26 to 28) comprising a lower washer piece (23), an upper washer piece (24) with a splined feature (25), a plurality of complementary stepped features which comprise the mating surfaces of the lower washer (23) and the upper washer (24), and a plurality of sliding planes created by the interface of the lower washer (23) and the upper washer (24).

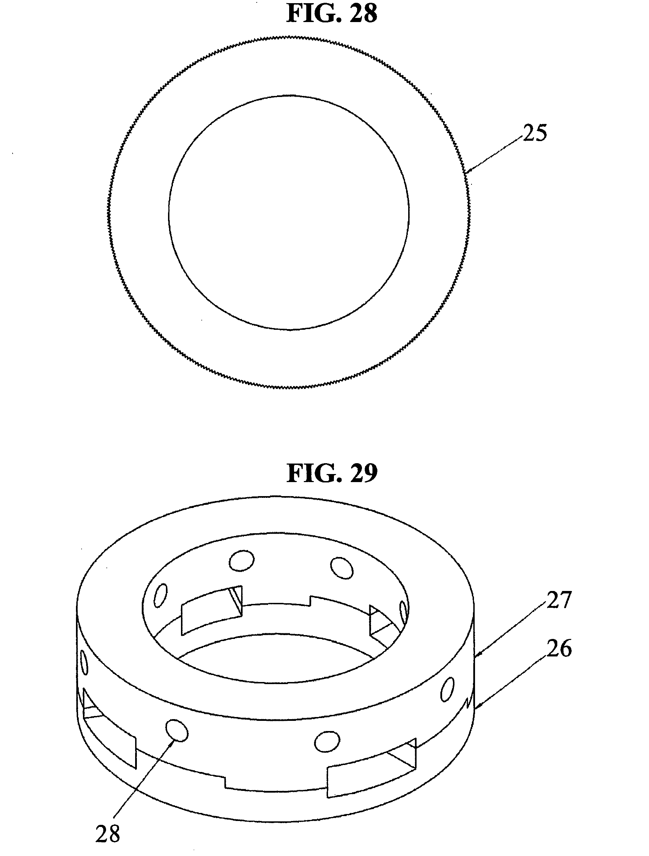

There is provided another embodiment of the load relief washer assembly (FIGS. 29 to 30) comprising a lower washer piece (26), an upper washer piece (27) with a plurality of transverse holes (28), a plurality of complementary stepped features which comprise the mating surfaces of the lower washer (26) and the upper washer (27), and a plurality of sliding planes created by the interface of the lower washer (26) and the upper washer (27).

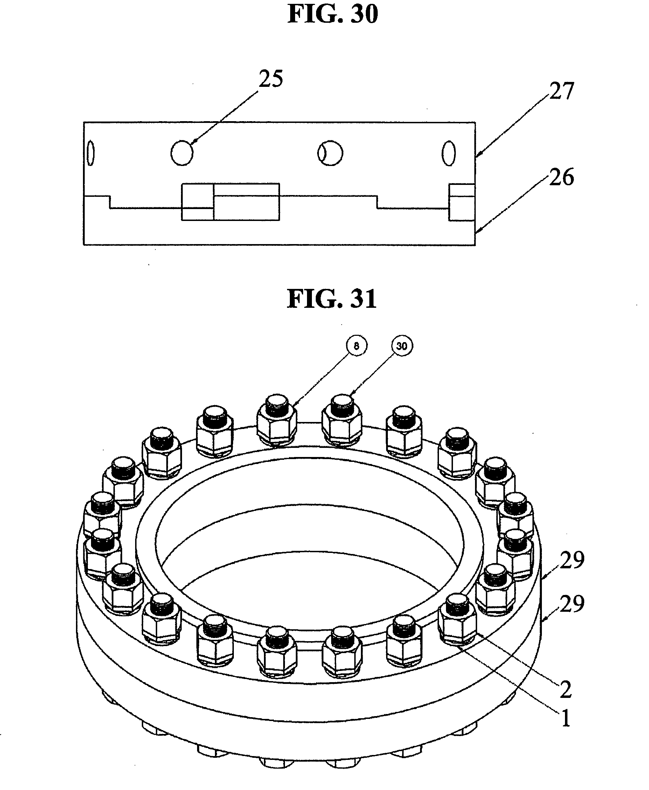

There is also provided an embodiment with multiple load relief washer assemblies (FIGS. 31 to 32) combined with threaded bolts (30) and threaded nuts (8) to clamp common flanges (29) together. The load relief washer assemblies each comprise a lower washer piece (1), an upper washer piece (2), a plurality of complementary stepped features which comprise the mating surfaces of the lower washer (1) and the upper washer (2), and a plurality of sliding planes created by the interface of the lower washer (1) and the upper washer (2). The lower washer (1) and the upper washer (2) each include a hole in their body through which a main bolt or stud may pass.

Other aspects and advantages will be more readily apparent as the present invention becomes better understood by reference to the following detailed description and considered in connection with the accompanying drawings in which like reference symbols designate like elements throughout the figures.

### BRIEF DESCRIPTION OF THE DRAWINGS

FIG. 1 is a top isometric view showing the load relief washer assembly according to an embodiment of the present disclosure.
FIG. 2 is a bottom isometric view of FIG. 1 showing the stepped features.
FIG. 3 is a side view of FIG. 1 showing the alignment of various parts.
FIG. 4 is a bottom view of FIG. 1 showing the hole through which the main stud or bolt (not shown) may pass.
FIG. 5 is a bottom isometric view of FIG. 1 with the bottom washer removed showing the top washer.
FIG. 6 is a side view of FIG. 1 with the bottom washer removed showing the stepped features of the top washer.
FIG. 7 is a bottom view of FIG. 1 with the bottom washer removed showing the layout of the top washer.
FIG. 8 is a top isometric view of FIG. 1 with the top washer removed showing the bottom washer.
FIG. 9 is a bottom isometric view of FIG. 1 with the top washer removed showing the flat surface of the bottom washer.
FIG. 10 is a side view of FIG. 1 with the top washer removed showing the stepped features of the bottom washer.
FIG. 11 is a top isometric view showing the load relief washer assembly in the activated position according to an embodiment of the present disclosure.
FIG. 12 is a bottom isometric view of FIG. 11 showing the stepped features.
FIG. 13 is a side view of FIG. 11 showing the alignment of various parts.
FIG. 14 is an isometric view of a load relief washer with a bolted assembly including a headed bolt, a nut, and two clamped work pieces.
FIG. 15 is a side view of FIG. 14 showing a load relief washer with a bolted assembly including a headed bolt, a nut, and two clamped work pieces.
FIG. 16 is a full section view of FIG. 14 taken generally along the lines A-A of FIG 15 showing a load relief washer with a bolted assembly including a headed bolt, a nut, and two clamped work pieces.
FIG. 17 is an isometric view of an activated load relief washer with a bolted assembly including a headed bolt, a nut, and two work pieces.
FIG. 18 is a side view of FIG. 17 showing an activated load relief washer with a headed bolt, a nut, two clamped work pieces, and a gap between the nut and top washer.
FIG. 19 is a full section view of FIG. 17 showing an activated load relief washer with a bolted assembly and a gap between the nut and top washer.
FIG. 20 is a top isometric view showing a load relief washer assembly according to an embodiment of the present disclosure with three step levels.
FIG. 21 is a bottom isometric view of FIG. 20 showing a load relief washer assembly with three step levels.
FIG. 22 is an isometric view showing a load relief washer assembly according to an embodiment of the present disclosure with 8 sets of stepped features.
FIG. 23 is a top isometric view showing a load relief washer assembly according to an embodiment of the present disclosure with a dodecagonal feature on the top washer.
FIG. 24 is a bottom isometric view of FIG. 23 showing a load relief washer assembly with a dodecagonal feature on the top washer.
FIG. 25 is a top view of FIG. 23 showing a load relief washer assembly with a dodecagonal feature on the top washer.
FIG. 26 is a top isometric view showing a load relief washer assembly according to an embodiment of the present disclosure with a splined feature on the top washer.
FIG. 27 is a bottom isometric view of FIG. 26 showing a load relief washer assembly with a splined feature on the top washer.
FIG. 28 is a top view of FIG. 26 showing a load relief washer assembly with a splined feature on the top washer.
FIG. 29 is an isometric view showing a load relief washer assembly according to an embodiment of the present disclosure with transverse holes on the top washer.
FIG. 30 is a side view of FIG. 29 showing a load relief washer assembly with transverse holes on the top washer.
FIG. 31 is an isometric view of multiple load relief washers with a bolted assembly including headed bolts, nuts, and two clamped circular flanges.
FIG. 32 is a side view of FIG. 31 showing multiple load relief washers with a bolted assembly including headed bolts, nuts, and two clamped circular flanges.
FIG. 33 is a top isometric view showing the load relief washer assembly according to an embodiment of the present disclosure which relies on friction.
FIG. 34 is a top isometric view of FIG. 33 with the top washer removed showing the bottom washer.
FIG. 35 is an isometric view of multiple load relief washers which rely on friction with a bolted assembly including headed bolts, nuts, and two clamped circular flanges.
FIG. 36 is a top isometric view showing the load relief washer assembly according to an embodiment of the present invention.
FIG. 37 is a bottom isometric view of FIG. 36 with the bottom washer removed showing the top washer.
FIG. 38 is a bottom isometric view of FIG. 36 with the top washer removed showing the bottom washer and gripping features.

### DETAILED DESCRIPTION

With reference to the annexed figures, preferred embodiments of the present disclosure will be herein described for indicative purposes and by no means represent limitations.

The figures and description attached to it are only intended to illustrate the idea of the disclosure. As to the details, the disclosure may vary within the scope of the claims. So, for example, the size and shape of the tension relief system may be chosen to best fit the fastened assembly.

Also, as used hereinabove and hereinafter, the terms "stud", "bolt", "rod", and/or other similarly shaped "fasteners" used in securing assemblies are intended to be used interchangeably and could refer to any one of these fasteners.

There is provided a load relief washer assembly for threaded fasteners (FIGS. 1 to 19) including comprising a lower washer piece (1) (also referred to as either a first or second washer body or piece), an upper washer piece (2) (also referred to as either a first or second washer body or piece), a plurality of complementary stepped features (4) which comprise the mating surfaces of the lower washer (1) and the upper washer (2), and a plurality of sliding planes (3) created by the interface of the lower washer (1) and the upper washer (2). The lower washer (1) and the upper washer (2) each include a hole (5) in their body through which a fastener such as a main bolt or stud may pass.

A first embodiment is best shown in FIGS. 1 to 3 and FIGS. 13 to 19. Components of the load relief washer assembly include or comprise a lower washer piece (1), an upper washer piece (2), a plurality of complementary stepped features (4) which include or comprise the mating surfaces of the lower washer (1) and the upper washer (2), and a plurality of sliding planes (3) created by the interface of the lower washer (1) and the upper washer (2). A threaded fastener or bolt (9) passes through holes (5) in the bodies of the lower washer (1) and the upper washer (2) and mates with a threaded fastener or nut (8) to clamp two work pieces (6) together. The stud (9) can pass through holes in the two work pieces (6) wherein the stud (9) can have an integral hex head (7) (see FIGS. 14 to 19) to allow it to be turned into place using an external means or tool, such as a hex socket. Alternatively, the stud can pass through aligned holes in the two work pieces (6) and thread into a standard nut under the bottom work piece (6), or the stud (9) can be threaded into the bottom work piece (6).

The stepped features (4) extend axially outward from at least a first face of the lower and upper washers, i.e., in an axial direction that is parallel to an axis of the hole and/or a longitudinal axis of the fastener. As shown, the stepped features preferably extend from only one face of each of the lower and upper washers, and likewise from the face of each washer that is disposed in facing, potential mating relation with the other washer or body. Moreover, the stepped features are disposed in circumferentially spaced relation around the annular washer (or in spaced relation around any other shape that the bodies/washers adopt). The stepped features on one body/washer preferably have the same circumferential dimension as the recesses in the other body/washer. Further, the stepped features preferably form a shoulder that extends in the axial direction, .i.e., substantially perpendicular to an outer surface of each stepped feature and outer face of each sliding plane. Thus, the outer surfaces of the stepped features are disposed in facing, sliding relation with one another until the washers/bodies are re-oriented or rotated to position the outer surface of the stepped feature in circumferential alignment with the outer face of the recess.

The tensile load in the main bolt (9) clamps the load relief washer assembly and the work pieces (6) together, thereby making the load relief washer assembly part of the bolted assembly. The nut (8) bears down on the upper washer (2), and the top work piece (6) similarly compresses the lower washer (1). However, relative movement of the upper washer (2) and the lower washer (1) towards each other is inhibited by engagement between their raised, stepped features (4); thus, the tensile load in the main bolt (9) is transferred to the plurality of sliding planes (3) created by the interface of the lower washer (1) and the upper washer (2).

To activate the load relief washer assembly, the upper washer (2) is rotated relative to the lower washer (1), sliding along the mating surfaces (3). In this example, a hexagonal shaped feature is included to aid in achieving said rotation though an external means or tool, such as a hex socket. Once enough relative rotation between the lower washer (1) and the upper washer (2) is achieved, the complementary stepped features (4) of one washer/body align with the recess between the stepped feature in the other washer/body, allowing the lower washer (1) and the upper washer (2) to axially move toward each other. As the overall thickness of the bolted assembly is reduced, bolt stretch of the main stud (9) is alleviated and the tensile load lessens. If necessary, the height of the bolted assembly can be reduced past the point of removing stretch of the main stud (9), thereby creating a gap (10) between the upper washer (2) and the nut (8). The reduction of the tensile load in the bolt (9) corresponds to a reduction in the forces on the threaded features of the nut (8) and the main bolt (9); thus, the bolted assembly may be disassembled with minimal risk of galling.

It is to be understood that even though a stud (9) with an integral head (7) has been shown, the use of other types of studs and other types of mating techniques between the studs and work pieces (6) are also contemplated. For example, the mating of the stud (9) with the lower work piece (6) could be effected with a normal threaded nut which is threaded on a stud until it abuts on and mates with the lower work piece (6). Therefore, the present invention is not limited to a particular mating technique between the stud (9) and work pieces (6).

In another embodiment, multiple instances of the present disclosure are shown installed on the face of a circular flange (FIGS. 31 to 32). The stud bolts (30) are inserted through the lower washers (1), upper washers (2), threaded nuts (8), and the corresponding flanges (29) that are mating together.

There is provided another embodiment of the load relief washer assembly (FIGS. 20 to 21) including or comprising a lower washer piece (11), an upper washer piece (12), sets of four complementary stepped features (14) circumferentially spaced from one another by contiguous stepped features or recesses which include or comprise the mating surfaces of the lower washer (11) and the upper washer (12), and a plurality of sliding planes (13) created by the interface of the lower washer (11) and the upper washer (12). The greater number of stepped features (14) allows activation to be achieved with less rotation of the lower washer (11) and the upper washer (12).

There is provided another embodiment of the load relief washer assembly (FIG. 22) comprising a lower washer piece (15), an upper washer piece (16), eight sets of complementary stepped features (18) which comprise the mating surfaces of the lower washer (15) and the upper washer (16), and a plurality of sliding planes (17) created by the interface of the lower washer (15) and the upper washer (16). The greater number of sets of complementary stepped features (18) allows activation to be achieved with less rotation of the lower washer (15) and the upper washer (16) and can change the load distribution.

Also, it is to be understood that even though select step-like features have been shown, the use of other types and shapes of the steps (4) are also contemplated. For example, said features could be castellated, slightly angled, or linear rather than annular. Therefore, the present disclosure is not limited to the particular type, shape, or number of the steps (4).

There is provided another embodiment of the load relief washer assembly (FIGS. 23 to 25) comprising a lower washer piece (19), an upper washer piece (20) with a dodecagonal feature, a plurality of complementary stepped features (22) which include or comprise the mating surfaces of the lower washer (19) and the upper washer (20), and a plurality of sliding planes (21) created by the interface of the lower washer (11) and the upper washer (12). The dodecagonal feature is included to aid in achieving relative rotation of the lower washer (11) and the upper washer (12) though an external means or tool, such as a 12-point socket.

There is provided another embodiment of the load relief washer assembly (FIGS. 26 to 28) including or comprising a lower washer piece (23), an upper washer piece (24) with a splined feature (25), a plurality of complementary stepped features which comprise the mating surfaces of the lower washer (23) and the upper washer (24), and a plurality of sliding planes created by the interface of the lower washer (23) and the upper washer (24). The splined feature (25) is included to aid in achieving relative rotation of the lower washer (23) and the upper washer (24) though an external means or tool, such as a splined socket.

There is provided another embodiment of the load relief washer assembly (FIGS. 29 to 30) including or comprising a lower washer piece (26), an upper washer piece (27) with a plurality of transverse holes (28), a plurality of complementary stepped features which comprise the mating surfaces of the lower washer (26) and the upper washer (27), and a plurality of sliding planes created by the interface of the lower washer (26) and the upper washer (27). The transverse holes (28) are included to aid in achieving relative rotation of the lower washer (26) and the upper washer (27) though an external means or tool, such as a spanner wrench or tommy wrench.

Also, it is to be understood that even though hexagonal and other select features have been shown to aid in activation of the device, the use of other types of aids are also contemplated. For example, activation could be aided by rectangular, toothed, gear-like, or roughed features. Additionally, no supplementary activation aiding feature is necessary. Therefore, the present disclosure is not limited to a particular feature to aid in achieving relative rotation of the lower washer (1) and the upper washer (2).

Obviously, even if only some shapes of load relief washer assemblies have been shown and described, the skilled addressee will understand that the lower washer (1) and the upper washer (2) of the present invention could be provided in a variety of shapes and sizes according to the specific needs of a specific bolted assembly.

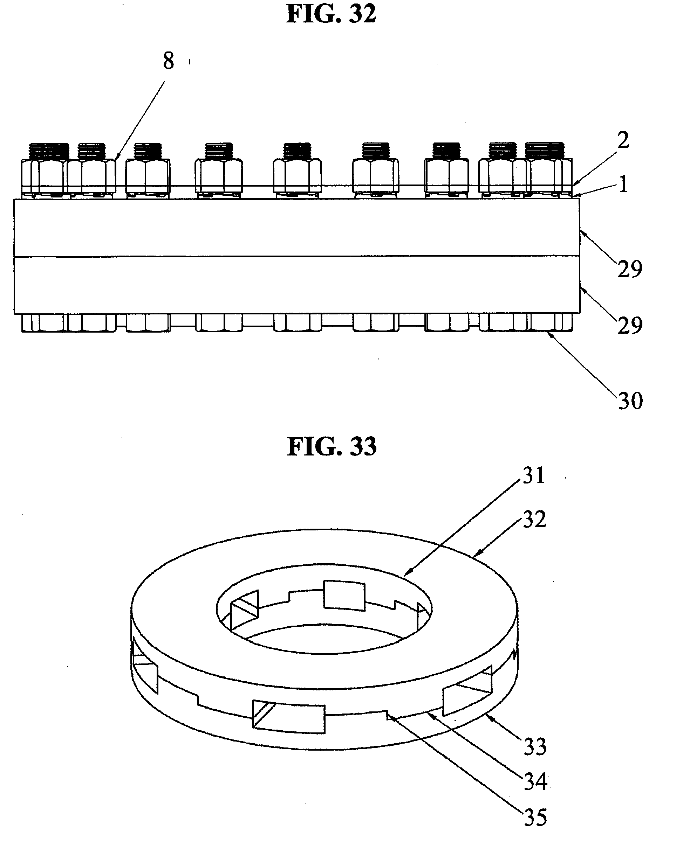

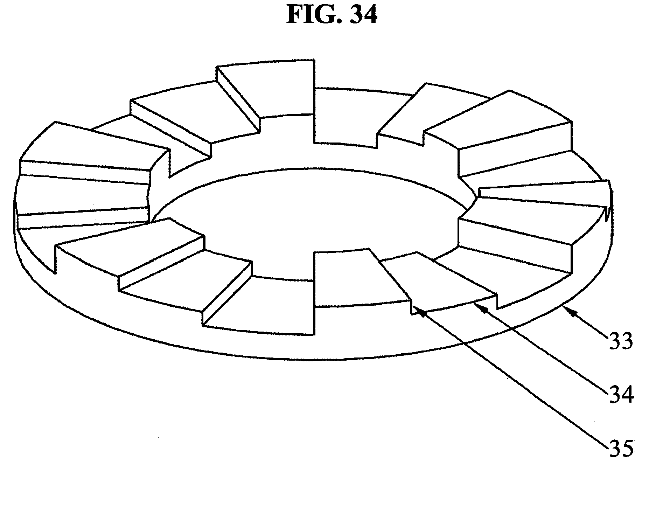

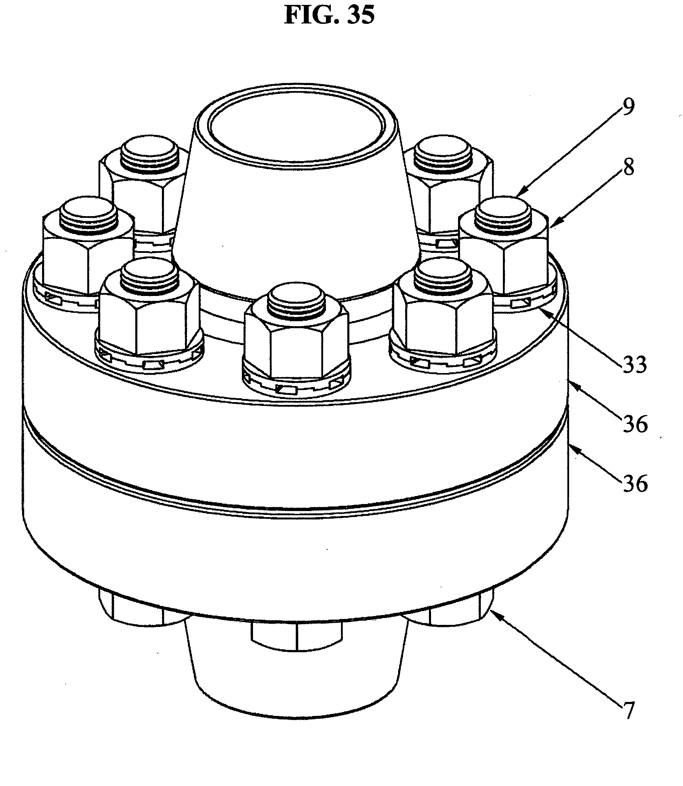

There is provided another embodiment of the load relief washer assembly (FIGS. 33 to 35) including or comprising a lower washer piece (33), an upper washer piece (32), sets of complementary stepped features (35) which include or comprise the mating surfaces of the lower washer (33) and the upper washer (32), and a plurality of sliding planes (34) created by the interface of the lower washer (33) and the upper washer (32). Relative rotation of the lower washer (33) and the upper washer (32) is achieved through frictional forces between the nut (8) and the upper washer (32) during disassembly. Thus, only a small amount of rotation of the nut (8) would be required for load release.

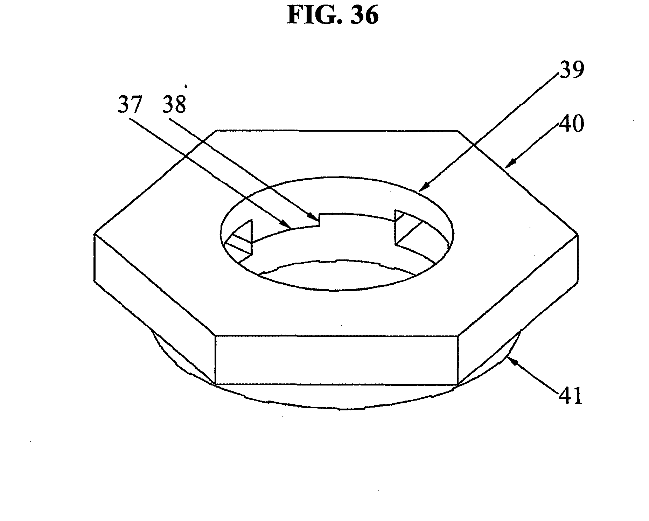

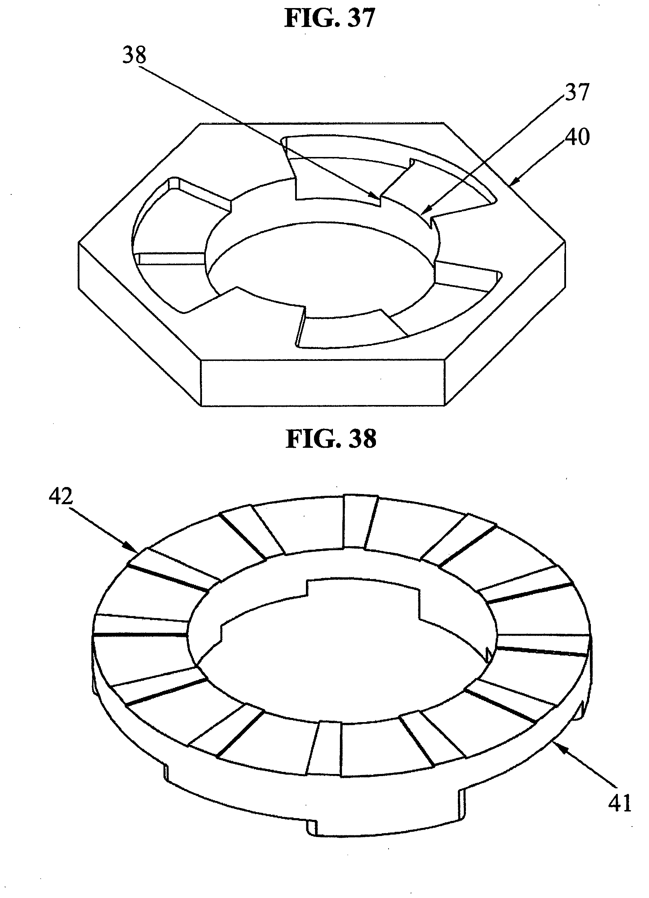

There is provided another embodiment of the load relief washer assembly (FIGS. 36 to 38) including or comprising a lower washer piece (41), an upper washer piece (40), sets of complementary stepped features (38) which include or comprise the mating surfaces of the lower washer (41) and the upper washer (40), and a plurality of sliding planes (37) created by the interface of the lower washer (41) and the upper washer (40). The stepped features (38) of the upper washer piece (40) are cut into said upper piece (40) in order to produce a lower overall height. Features (42) on the bottom of the lower washer piece (41) are designed to increase grip, thereby promoting relative rotation of the upper washer piece (40) and the lower washer piece (41) during disassembly, rather than synchronized rotation.

This written description uses examples to describe the disclosure, including the best mode, and also to enable any person skilled in the art to make and use the disclosure. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. The above examples are merely illustrative of various aspects of the present disclosure, wherein equivalent alterations and/or modifications will occur to others skilled in the art upon reading and understanding this specification and the annexed drawings. In particular regard to the various functions performed by the above described components (assemblies, devices, systems, and the like), the terms (including a reference to "means") used to describe such components are intended to correspond, unless otherwise indicated, to any component which performs the specified function of the described component (i.e., that is functionally equivalent), even though not structurally equivalent to the disclosed structure which performs the function in the illustrated implementations of the disclosure. In addition, although a particular feature of the disclosure may have been illustrated and/or described with respect to only one of several implementations, such feature may be combined with one or more other features of the other implementations as may be desired and advantageous for any given or particular application.

## Claims

1. A load relief washer assembly for aiding in the disassembly of an associated fastener assembly, said load relief washer assembly comprising:
a. a lower washer piece (1) with a substantially annular shape around an inner hole, whereby the associated fastener may pass through the inner hole of said annular body, and protrusions (4) extending from a face of said lower washer piece (1) wherein the protrusions include circumferentially extending, stepped regions including a first stepped region that extends axially outward a first dimension from the face, and a second, stepped region that extends axially outward a second dimension from the face, wherein the second dimension is greater or less than the first dimension;
b. an upper washer piece (2) with a substantially annular shape around an inner hole (5) whereby the associated fastener (9) may pass through the inner hole of said upper washer piece (2), with protrusions extending from at least one side of said upper washer piece (2)and configured for mating connection with the corresponding protrusions of said lower washer piece (1) such that once the lower washer piece (1) and the upper washer piece (2) are interfaced together in the fastener assembly, sufficient rotation of said lower washer piece (1) relative to said upper washer piece (2) aligns said protrusions, thereby allowing said lower washer piece (1) and said upper washer piece (2)to move toward each other, thereby reducing an overall height of the load relief washer assembly.

2. A load relief washer assembly as claimed in claim 1, wherein at least one of said lower and upper washer pieces (1, 2) is a curved structure.

3. A load relief washer assembly as claimed in any of claims 1-2, wherein at least one of said lower washer piece (1) and said upper washer piece (2) further comprises an alignment groove located on at least one face thereof.

4. A load relief washer assembly as claimed in any of claims 1-3, wherein said lower washer piece (1) further comprises a geometric feature on at least one face.

5. A load relief washer assembly as claimed in any of claims 1-4, wherein said lower washer piece (1) further comprises a surface finish on at least one face.

6. A load relief washer assembly as claimed in any of claims 1-5, wherein at least one of said lower washer piece (1) and said upper washer piece (2) further comprises a gear-like feature on at least one face.

7. A load relief washer assembly as claimed in any of claims 1-6, wherein at least one of said lower washer piece (1) and said upper washer piece (2) further comprises a motorized system.

8. A load relief washer assembly as claimed in any of claims 1-7, wherein said lower washer piece (1) further comprises an internally threaded feature for engagement of an associated fastener (9).

9. A load relief washer assembly as claimed in claim 1, wherein the circumferentially adjacent stepped regions include sliding planes (13) that extend axially from the lower washer piece (1).

10. A load relief washer assembly as claimed in an of claims 1-9, wherein the first stepped region of the lower washer piece (1) an axial, first dimension that has a circumferential configuration that mates with a corresponding recess of the upper washer piece (2).

11. A load relief washer assembly as claimed in claim 10, wherein a first stepped region of the upper washer piece (2)has an axial, second dimension that has a circumferential configuration that mates with a corresponding recess of the lower washer piece (1).

12. A load relief washer assembly as claimed in claim 1, wherein the second stepped region of the lower washer piece (1) has an axial second dimension less than the axial first dimension of the lower washer piece (1) for engagement with a recess along a second circumferential region of the upper washer piece (2), and a second stepped region of the upper washer piece (2)has an axial second dimension less than the axial first dimension of the upper washer piece (2)for engagement with a recess along a second circumferential region of the lower washer piece (1).

13. A method of relieving a load in a fastener assembly comprising:
providing a lower washer piece (1) with protrusions (4) that extend over at least a first face thereof, wherein the protrusions (4) include circumferentially extending, stepped regions including a first stepped region that extends axially outward a first dimension from the face, and a second, stepped region that extends axially outward a second dimension from the face, wherein the second dimension is greater than the first dimension; and
providing an upper washer piece (2) with protrusions (4) that extend over at least a first face thereof in facing, selective engagement with the lower washer piece (1) protrusions; and
once the lower washer piece (1) and the upper washer piece (2) are interfaced together in the fastener assembly, rotating said lower washer piece (1) relative to said upper washer piece (2) to align said protrusions, thereby allowing said lower washer piece (1) and said upper washer piece (2) to move toward each other, thereby relieving the load.

## Patentansprüche

1. Entlastungsscheibenbaugruppe zur Unterstützung der Demontage einer dazugehörigen Verbindungselementebaugruppe, wobei die Entlastungsscheibenbaugruppe aufweist:
a. ein unteres Scheibenelement (1) mit einer im Wesentlichen ringförmigen Form um ein inneres Loch, wobei das dazugehörige Verbindungselement durch das innere Loch des ringförmigen Körpers passen würde, und Vorsprüngen (4), die sich von einer Fläche des unteren Scheibenelements erstrecken, wobei die Vorsprünge umlaufend hervorstehende, gestufte Regionen aufweisen mit einer ersten gestuften Region, die sich axial nach außen mit einer ersten Abmessung von der Fläche erstreckt, und einer zweiten gestuften Region, die sich axial nach außen mit einer zweiten Abmessung von der Fläche erstreckt, wobei die zweite Abmessung größer oder kleiner als die erste Abmessung ist,
b. ein oberes Scheibenelement (2) mit einer im Wesentlichen ringförmigen Form um ein inneres Loch (5), wobei das dazugehörige Verbindungselement (9) durch das innere Loch des oberen Scheibenelements (2) passen würde, mit Vorsprüngen, die sich von mindestens einer Seite des oberen Scheibenelements erstrecken und angepasst sind, für eine Paarungsverbindung mit den dazugehörigen Vorsprüngen des unteren Scheibenelements (1), sodass, wenn das untere Scheibenelement (1) und das obere Scheibenelement (2) in der Verbindungselementebaugruppe gekoppelt werden, hinreichende Rotation des unteren Scheibenelements (1) relativ zum oberen Scheibenbauteil (2) die Vorsprünge ausrichtet, wodurch eine Bewegung des unteren Scheibenelements (1) und des oberen Scheibenelements (2) aufeinander zu möglich ist, und wodurch eine Gesamthöhe der Entlastungsscheibenbaugruppe reduziert wird.

2. Entlastungsscheibenbaugruppe nach Anspruch 1, wobei das untere Scheibenelement (1) und/oder das obere Scheibenelement (2) eine gekrümmte Struktur aufweisen.

3. Entlastungsscheibenbaugruppe nach einem der Ansprüche 1 oder 2, wobei das untere Scheibenelement (1) und/oder das obere Scheibenelement (2) weiterhin eine Ausrichtungskerbe auf mindestens einer ihrer/seiner Flächen aufweisen.

4. Entlastungsscheibenbaugruppe nach einem der Ansprüche 1 bis 3, wobei das untere Scheibenelement (1) weiterhin ein geometrisches Element auf mindestens einer Fläche aufweist.

5. Entlastungsscheibenbaugruppe nach einem der Ansprüche 1 bis 4, wobei das untere Scheibenelement (1) weiterhin eine Oberflächenbehandlung auf mindestens einer Fläche aufweist.

6. Entlastungsscheibenbaugruppe nach einem der Ansprüche 1 bis 5, wobei das untere Scheibenelement (1) und/oder das obere Scheibenelement (2) weiterhin ein zahnradähnliches Element auf mindestens einer Fläche aufweisen.

7. Entlastungsscheibenbaugruppe nach einem der Ansprüche 1 bis 6, wobei das untere Scheibenelement (1) und/oder das obere Scheibenelement (2) weiterhin ein motorisiertes System aufweisen.

8. Entlastungsscheibenbaugruppe nach einem der Ansprüche 1 bis 7, wobei das untere Scheibenelement (1) weiterhin ein inneres Gewindeelement zum Wechselwirken mit einem dazugehörigen Verbindungselementes (9) aufweist.

9. Entlastungsscheibenbaugruppe nach Anspruch 1, wobei die umlaufend benachbarten, gestuften Regionen Gleitflächen (13) aufweisen, die sich axial vom unteren Scheibenelement erstrecken.

10. Entlastungsscheibenbaugruppe nach einem der Ansprüche 1 bis 9, wobei die erste gestufte Region des unteren Scheibenelements (1) eine axiale, erste Abmessung mit umlaufender Struktur, die in eine dazugehörige Aussparung des oberen Scheibenelementes (2) eingreift.

11. Entlastungsscheibenbaugruppe nach Anspruch 10, wobei eine erste gestufte Region des oberen Scheibenelements (2) eine axiale, zweite Abmessung mit umlaufender Struktur aufweist, die in eine dazugehörige Aussparung des unteren Scheibenelementes (1) eingreift.

12. Entlastungsscheibenbaugruppe nach Anspruch 1, wobei die zweite gestufte Region des unteren Scheibenelements (1) eine axiale, zweite Abmessung kleiner als die axiale, erste Abmessung des unteren Scheibenelements (1) zum Wechselwirken mit einer Aussparung entlang einer zweiten umlaufenden Region des oberen Scheibenelementes (2) aufweist, und eine zweite gestufte Region des oberen Scheibenelementes (2) eine axiale zweite Abmessung kleiner als die axiale erste Abmessung des oberen Scheibenelements (2) zum Wechselwirken mit einer Aussparung entlang einer zweiten umlaufenden Region des unteren Scheibenelementes (1) aufweist.

13. Verfahren zur Entlastung einer Verbindungselementebaugruppe, aufweisend:
- Bereitstellen eines unteren Scheibenelementes (1) mit Vorsprüngen (4), die sich von mindestens einer ersten Fläche des unteren Scheibenelements erstrecken, wobei die Vorsprünge umlaufend hervorstehende, gestufte Regionen aufweisen mit einer ersten gestuften Region, die sich axial nach außen mit einer ersten Abmessung von der Fläche erstreckt, und einer zweiten gestuften Region, die sich axial nach außen mit einer zweiten Abmessung von der Fläche erstreckt, wobei die zweite Abmessung größer als die erste Abmessung ist, und
- Bereitstellen eines oberen Scheibenelementes (2) mit Vorsprüngen (4), die sich von mindestens einer ersten Fläche des oberen Scheibenelements erstrecken, zur zugewandten ausgewählten Wechselwirkung mit Vorsprüngen des unteren Scheibenelementes (1), und,
- wenn das untere Scheibenelementes (1) und das obere Scheibenelementes (2) miteinander in der Verbindungselementebaugruppe gekoppelt sind, ein Rotieren des unteren Scheibenelementes (1) relativ zum oberen Scheibenelement (2) zum Ausrichten der Vorsprünge führt, wodurch eine Bewegung des unteren Scheibenelements (1) und des oberen Scheibenelements (2) aufeinander zu möglich ist, und dadurch zu einer Entlastung führt.

## Revendications

1. Ensemble de rondelles de limitation de charge pour aider le démontage d'un ensemble de fixation associé, ledit ensemble de rondelles de limitation de charge comprenant :
a. une pièce de rondelle inférieure (1) avec une forme sensiblement annulaire autour d'un trou interne, moyennant quoi la fixation associé peut passer à travers le trou interne dudit corps annulaire, et des saillies (4) s'étendant à partir d'une face de ladite pièce de rondelle inférieure (1), dans lequel les saillies comprennent des régions étagées s'étendant de manière circonférentielle comprenant une première région étagée qui s'étend axialement vers l'extérieur dans une première dimension à partir de la face, et une seconde région étagée qui s'étend axialement vers l'extérieur sur une seconde dimension à partir de la face, dans lequel la seconde dimension est supérieure ou inférieure à la première dimension ;
b. une pièce de rondelle supérieure (2) avec une forme sensiblement annulaire autour d'un trou interne (5), moyennant quoi la fixation (9) associée peut passer à travers le trou interne de ladite pièce de rondelle supérieure (2), avec des saillies s'étendant à partir d'au moins un côté de ladite pièce de rondelle supérieure (2) et configurée pour le raccordement par couplage avec des saillies correspondantes de ladite pièce de rondelle inférieure (1), de sorte qu'une fois que la pièce de rondelle inférieure (1) et la pièce de rondelle supérieure (2) sont interfacées ensemble dans l'ensemble de fixation, la rotation suffisante de ladite pièce de rondelle inférieure (1) par rapport à ladite pièce de rondelle supérieure (2) aligne lesdites saillies, permettant ainsi à ladite pièce de rondelle inférieure (1) et à ladite pièce de rondelle supérieure (2) de se déplacer l'une vers l'autre, réduisant ainsi une hauteur globale de l'ensemble de rondelles de limitation de charge.

2. Ensemble de rondelles de limitation de charge selon la revendication 1, dans lequel au moins l'une desdites pièces de rondelle inférieure et supérieure (1, 2) est une structure incurvée.

3. Ensemble de rondelles de limitation de charge selon l'une quelconque des revendications 1 à 2, dans lequel au moins l'une parmi ladite pièce de rondelle inférieure (1) et ladite pièce de rondelle supérieure (2) comprend en outre une rainure d'alignement positionnée sur au moins l'une de ses faces.

4. Ensemble de rondelles de limitation de charge selon l'une quelconque des revendications 1 à 3, dans lequel ladite pièce de rondelle inférieure (1) comprend en outre une caractéristique géométrique sur au moins une face.

5. Ensemble de rondelles de limitation de charge selon l'une quelconque des revendications 1 à 4, dans lequel ladite pièce de rondelle inférieure (1) comprend en outre une finition de surface sur au moins une face.

6. Ensemble de rondelles de limitation de charge selon l'une quelconque des revendications 1 à 5, dans lequel au moins l'une parmi ladite pièce de rondelle inférieure (1) et ladite pièce de rondelle supérieure (2) comprend en outre une caractéristique en forme d'engrenage sur au moins une face.

7. Ensemble de rondelles de limitation de charge selon l'une quelconque des revendications 1 à 6, dans lequel au moins l'une parmi ladite pièce de rondelle inférieure (1) et ladite pièce de rondelle supérieure (2) comprend en outre un système motorisé.

8. Ensemble de rondelles de limitation de charge selon l'une quelconque des revendications 1 à 7, dans lequel ladite pièce de rondelle inférieure (1) comprend en outre une caractéristique intérieurement filetée pour la mise en prise d'une fixation (9) associée.

9. Ensemble de rondelles de limitation de charge selon la revendication 1, dans lequel les régions étagées circonférentiellement adjacentes comprennent des plans de coulissement (13) qui s'étendent axialement à partir de la pièce de rondelle inférieure (1).

10. Ensemble de rondelles de limitation de charge selon l'une quelconque des revendications 1 à 9, dans lequel la première région étagée de la pièce de rondelle inférieure (1) a une première dimension axiale qui a une configuration circonférentielle qui se couple avec un évidement correspondant de la pièce de rondelle supérieure (2).

11. Ensemble de rondelles de limitation de charge selon la revendication 10, dans lequel une première région étagée de la pièce de rondelle supérieure (2) a une seconde dimension axiale qui a une configuration circonférentielle qui se couple avec un évidement correspondant de la pièce de rondelle inférieure (1).

12. Ensemble de rondelles de limitation de charge selon la revendication 1, dans lequel la seconde région étagée de la pièce de rondelle inférieure (1) a une seconde dimension axiale inférieure à la première dimension axiale de la pièce de rondelle inférieure (1) pour la mise en prise avec un évidement le long d'une seconde région circonférentielle de la pièce de rondelle supérieure (2), et une seconde région étagée de la pièce de rondelle supérieure (2) a une seconde dimension axiale inférieure à la première dimension axiale de la pièce de rondelle supérieure (2) pour la mise en prise avec un évidement le long d'une seconde région circonférentielle de la pièce de rondelle inférieure (1).

13. Procédé pour limiter une charge dans un ensemble de fixation comprenant les étapes consistant à :
prévoir une pièce de rondelle inférieure (1) avec des saillies (4) qui s'étendent sur au moins sa première surface, dans lequel les saillies (4) comprennent des régions étagées s'étendant de manière circonférentielle comprenant une première région étagée qui s'étend axialement vers l'extérieur sur une première direction par rapport à la face, et une seconde région étagée qui s'étend axialement vers l'extérieur sur une seconde direction par rapport à la face, dans lequel la seconde dimension est supérieure à la première dimension ; et
prévoir une pièce de rondelle supérieure (2) avec des saillies (4) qui s'étendent sur au moins sa première face en mise en prise sélective en vis-à-vis avec les saillies de la pièce de rondelle inférieure (1) ; et
une fois que la pièce de rondelle inférieure (1) et la pièce de rondelle supérieure (2) sont interfacées ensemble dans l'ensemble de fixation, faire tourner ladite pièce de rondelle inférieure (1) par rapport à ladite pièce de rondelle supérieure (2) pour aligner lesdites saillies, permettant ainsi à ladite pièce de rondelle inférieure (1) et à ladite pièce de rondelle supérieure (2) de se déplacer l'une vers l'autre, limitant ainsi la charge.
